# EUROPEAN PATENT APPLICATION

(11) **EP 2 575 244 A1**
(43) Date of publication of application: **03.04.2013**
(21) Application number: 11183514.6
(22) Date of filing: 30.09.2011
(51) Int. Cl.: H02K 51/00, H02K 49/10

(54) **Motor with magnet gears**

(71) Applicant: Lodestoneco Energy Holding Limited, 3040 Limassol (CY)
(72) Inventor: Rodriguez Jiminez, Francisco, 18151 Granada (ES)
(74) Representative: Cundy, Jack William

(57) **Abstract**

A magnetic motor (10), comprising a drive disc (20) with two permanent magnets (22) on the edge of the drive disc (20), fixed to the shaft (14). A propulsion disc (30) is mounted coaxially but independently of the drive disc (20). The propulsion disc (30) has two permanent magnets (32) on its edge. The drive disc (20) is speeded up. A propulsion mechanism (40) speeds up the propulsion disc (30) to a speed matching that of the drive disc (20), such that the propulsion disc (30) impels the drive disc (20) to rotate through interaction of the magnetic fields of the respective first and second magnets (22,32). A braking mechanism (50) is operative to brake the propulsion disc (30), whereby inertia of the drive disc (20) to continue to rotate. Whilst the propulsion disc (30) is held, the propulsion mechanism (40) is prepared to accelerate the propulsion disc (30) back up to speed. If the magnets (22,32) are facing each other, a control mechanism causes the brake (50) to release, and the propulsion mechanism (40) once again urges the propulsion disc (30) to rotate to push the drive disc (20) on in continuous rotation through the repulsion of the respective magnets (22,32).

## Description

### Field of the Invention

The invention relates generally to the field of magnetic motors, and in particular to motors capable of generating rotational output from electrical input through magnetic interactions. More particularly, the invention is directed to improvements relating to the magnetic interactions.

### Background to the Invention

The employment of magnets and magnetic forces is an essential part of the operation of electrical motors and the generation of electricity through alternators or generators. Magnetism is already utilised for a number of useful commercial and domestic purposes including energy production, as a navigational aid and in many electrical and electronic devices.

It is known that magnetic forces are capable of creating movement and moving objects, including the attraction or repulsion of other magnets or other material that enter within the magnetic fields. It is also known that such movement is limited in that the forces will only exert energy or movement whilst the objects are situated within the magnetic fields. It is also established that a stronger magnetic field will always dominate over a weaker magnetic field.

Accordingly, based on the above known established scientific principles, a rotating device in the form of a magnetic motor energised mainly by the interaction of magnetic forces that would rotate as a result of repeated impulses delivered by the interaction of magnetic fields has been devised. To achieve this, respecting the above principles, it is necessary to create an imbalance in the magnetic fields when they interact so that there is sufficient magnetic interaction between different magnetic fields and instead, will provide the impulse necessary to create sufficient motion.

An important part of the invention is that the magnetic fields of the respective magnets regularly come into contact with each other at appropriate intervals that will generate a sufficient number of rotational impulses in the same direction thereby creating a continuous rotating motion. It is essential that the forces of the magnetic fields do not lock together and this is achieved partly by creating an imbalance in the magnetic fields and partly by causing other physical movement in the motor created through the application of some electrical input. Thus the motion is created by a combination of magnetic interaction and electrical input.

The magnetic imbalance is created partly by grouping together side by side a number of permanent magnets of a first magnetic strength, shape and size assembled and packaged together with alterating polarities of the adjacent permanent magnets thereby creating or forming one magnetic block (the first magnets). The first magnets then interact with another magnetic block comprised of another group of a number of permanent magnets of a second magnetic strength, shape and size, grouped together side by side with alternating polarities (the second magnets). The composition of the first magnets is different to the composition of the second magnets.

The motor will not operate if, as in a conventional arrangement, one disc is a rotor and the other disc is a stator. The motor will also not operate unless there is some electrical input which generates some continuing intermittent (step-by-step) rotational movement in one of the discs that carry one of the groups of magnets.

This is because even if the first magnets and the second magnets are different and create a different magnetic field thereby assisting in creating the required imbalance in the magnetic field, a weaker magnet will always react to and be dominated by a stronger magnet. Accordingly, it will be the strongest single permanent magnet within either the group of the first magnets or within the group of the second magnets that will dominate the magnetic field over all the other weaker magnets. The effect therefore, if the motor were to have a stator and a rotor disc or if one of the discs were not moved intermittently independently of magnetic interaction, would be that the first magnets would lock with the second magnets or vice versa depending on which disc carries the group of permanent magnets that houses the strongest single permanent magnet, and the motor would therefore not rotate.

For the motor to rotate and to generate positive energy, it is necessary for the two discs upon which the first and second magnetic blocks are respectively placed to be rotors and for the intermittent movement of one of the discs to be assisted, controlled and regulated independently of the other disc but in synchronisation therewith. This independent intermittent movement of one of the discs is generated, controlled and regulated by a combination electrical input, mechanically and electronically.

Creating the required imbalance which generates rotational motion is also achieved by adjusting the distance between the two magnetic blocks placed on the respective discs and depends on the angle at which the first magnets meet the second magnets at the point of interaction or crossing.

It is the combination of the configuration of the different magnetic blocks, their interaction and the respective relative intermittent and synchronised movements of one of the discs relative to the other disc that stops the first magnets locking with the second magnets and instead provides the impulse that enables the permanent magnets to be used as a force to create movement and positive energy.

### Summary of the Invention

According to a first aspect of the invention, there is provided a magnetic motor comprising:
a first disc, mounted on a drive axis and having mounted thereon, at regular angular intervals, a number of first permanent magnets having a magnetic field of a first strength and polarity;
a second disc, mounted independently of the first disc for free rotation about the drive axis but coplanar with the first disc and having mounted thereon, at regular angular intervals, a number of second permanent magnets, each second magnet having magnetic field of a second strength and polarity, wherein the first and second magnets are located and spaced on the respective first and second discs such that the magnetic field of the or each first permanent magnet is able to interact with that of the or each second permanent magnet during rotation of the first disc relative to the second disc;
a propulsion mechanism resiliently coupled to the second disc and operatively coupled to a drive motor;
a braking mechanism operatively associated with the second disc; and
a control mechanism operatively coupled to the propulsion mechanism and to the braking mechanism and adapted to intermittently and cyclically, under system feedback and with the first disc rotating above a threshold speed:
   i) actuate the propulsion mechanism to urge the second disc to rotate to a speed substantially matching that of the first disc, thereby impelling the first disc to rotate through cooperative interaction of the magnetic fields of the respective first and second magnets;
   ii) actuate the braking mechanism to brake the second disc relative to the first disc, to stop and hold the second disc relative to the continuously rotating first disc, thereby allowing the magnetic fields of the respective first and second magnets to cross and move away from each other; and
   iii) actuate the braking mechanism to release the brake on the second disc on receiving notice of the respective first and second magnets being at a point where the magnetic interaction between the first and second magnets is at or close to a maximum;
      wherein electrical energy input via the drive motor is converted to kinetic energy in the first disc.

According to a second aspect of the invention, there is provided a method of driving an output shaft, comprising the steps of:
providing a first disc, mounted on the output shaft about a drive axis and having mounted thereon, at regular angular intervals, a number of first permanent magnets having a magnetic field of a first strength and polarity;
providing a second disc, mounted independently of the first disc for free rotation about the drive axis coplanar with the first disc and having mounted thereon, at regular angular intervals, a number of second permanent magnets, each second magnet having magnetic field of a second strength and polarity, wherein the first and second magnets are located and spaced on the respective first and second discs such that the magnetic field of the or each first permanent magnet is able to interact with that of the or each second permanent magnet during rotation of the first disc relative to the second disc;
providing a propulsion mechanism resiliently coupled to the second disc and operatively coupled to a drive motor;
providing a braking mechanism operatively associated with the second disc;
providing a control mechanism operatively coupled to the propulsion mechanism and to the braking mechanism; and
intermittently and cyclically, under system feedback and with the first disc rotating above a threshold speed:
   i) actuating the propulsion mechanism to rotate the second disc to a speed substantially matching that of the first disc, thereby impelling the first disc and the output shaft to rotate through cooperative interaction of the magnetic fields of the respective first and second magnets;
   ii) actuating the braking mechanism to stop and hold the second disc relative to the continuously rotating first disc, thereby allowing the magnetic fields of the respective first and second magnets to cross; and
   iii) actuating the braking mechanism to release the brake on the second disc on receiving notice of the respective first and second magnets being at a point where the magnetic interaction between the first and second magnets is at or close to a maximum;
      wherein electrical energy input via the drive motor is converted to kinetic energy in the first disc and the output shaft.

In one embodiment, there are multiple equally spaced magnets on the second disc. There may also or instead be multiple equally spaced magnets on the first disc.

In one embodiment, there are the same number of magnets on the first disc as on the second disc. In an alternative embodiment, the number of magnets on the second disc is an integer multiple of the number of magnets on the first disc. In another alternative embodiment, the number of magnets on the first disc is an integer multiple of the number of magnets on the second disc.

Typically, the magnets are located at the periphery of the respective discs.

In one embodiment, the or each first magnet comprises a group of individual sub-magnets, each sub-magnet having a particular field strength and polarity and being positioned and oriented relative to the other sub-magnets of the group so that the group together defines an effective magnet having a predetermined field strength and profile. Also or instead, the or each second magnet may comprise a group of individual sub-magnets, each sub-magnet having a particular field strength and polarity and being positioned and oriented relative to the other sub-magnets of the group so that the group together defines an effective magnet having a predetermined field strength and profile.

In one embodiment, the propulsion mechanism comprises a drive arm coupled to the drive motor and adapted to be rotated thereby about the drive axis, the drive arm being coupled to a fixed point on the second disc via a tension spring. Typically, the control mechanism further comprises a proximity sensor to detect when the fixed point on the second disc reaches a predetermined proximity to the drive arm, an output of the proximity sensor being used as an input for the braking mechanism and the propulsion mechanism.

In one embodiment, the control mechanism further comprises means to detect the relative rotational positions of the first and second discs, an output from said detection means being used as an input for the braking mechanism and/or for the drive motor and the propulsion mechanism. Typically, the detection means comprises a plurality of markers at regular angular intervals on the first disc positioned relative to the first magnets, and one or more sensors mounted on the second disc and adapted to detect the passing of each marker.

In one embodiment, the braking system comprises a brake rotor mounted to or integral with the second disc, and one or more brake callipers mounted on a support frame of the magnetic motor and operative, under hydraulic, pneumatic, or mechanical actuation, to urge brake pads into and out of contact with the brake rotor to respectively stop, hold and release the second disc relative to the support frame.

The second disc is therefore intermittently held relative to the rotating first disc, during which time the momentum of the first disc means that the first magnets will overcome the repulsion forces exerted on the first magnets by the associated second magnets and will 'cross', stepping the first magnets on to the next second magnets, at which point the process repeats, the second magnets being driven at the same or substantially the same rotational speed as the first magnets mounted on the first disc and over the distance swept by the drive arm, sufficient to enable the respective magnets to interact thereby pushing the first magnets (and hence the drive disc) on for a period of time until the brake is once again applied.

The point at which the brake on the second disc is released is timed such that the second magnets will be aligned with the respective first magnets at a point at which the cooperative interaction there between is at a maximum. The second disc is then accelerated to the same or substantially the same rotational speed as the first disc by the force exerted by the propulsion mechanism, and continues so as to rotate for the same distance as swept by the drive arm. In this way, the maximum onward push is transmitted to the first disc at each step of the process.

Typically, the braking mechanism is controlled electronically by the control mechanism.

### Brief Description of the Drawings

The invention will be described, by way of example, with reference to the accompanying drawings, in which:

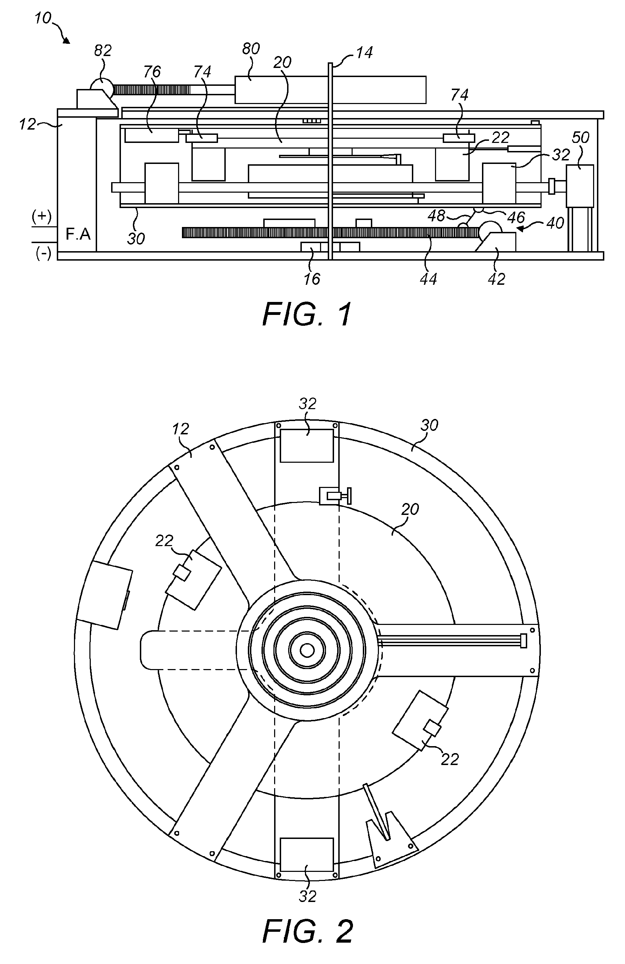

Fig.1 is a schematic cross-sectional side elevation of a magnetic motor according to an embodiment of the invention and comprising concentrically mounted first and second discs which are coplanar, each having magnets mounted thereon;
Fig. 2 is a top plan view of the magnetic motor of Fig. 1;
Figs. 3a to 3f are schematic diagrams illustrating the relative motions of the first and second discs of the motor of the invention;
Fig. 3g is a schematic detail view of a propulsion mechanism in accordance with an embodiment of the invention;
Fig. 4 is a detail view of a starter motor system of one embodiment of the invention;
Fig. 5a is a schematic illustration of a magnet on the second disc passing a magnet on the first disc;
Fig. 5b is a graphical representation of exemplary magnetic interactions occurring within the passage of the magnets of Fig. 5a; and
Fig. 5c is a comparative graphical representation of exemplary magnetic interactions of two identical magnets passing one another.

### Detailed Description

A magnetic motor 10 comprises a structural frame 12, supporting a centrally located drive shaft 14 in bearings 16. The drive shaft 14 defines a drive axis of the motor. A first, 'drive' disc 20 is fixedly mounted concentrically on the drive shaft 14 for rotation therewith. A number of first permanent magnets 22 are mounted at regular angular intervals around the periphery of the drive disc 20. Each first permanent magnet 22 has a magnetic field of a first strength and polarity. In the illustrated embodiment, there are two such first magnets 22, spaced at 180° intervals around the drive disc. In an alternative embodiment, there could instead be six such first magnets 22, spaced at 60° intervals around the drive disc. However, it will be appreciated that any number of such magnets could be used, including just a single one.

A second, 'propulsion' disc 30 is mounted independently of the drive disc 20 for free rotation about the drive shaft 14 and coplanar with the first disc 30. In other words, the propulsion disc 30 is mounted at a fixed distance from the drive disc 20 along the drive shaft 14, but is not secured to the drive shaft 14; the propulsion disc 30 is free to rotate independently of the drive shaft 14 and the drive disc 20. A number of second permanent magnets 32 are mounted at regular angular intervals around the periphery of the propulsion disc 30. Each second permanent magnet 32 has a magnetic field of a second strength and polarity. In a preferred embodiment, there are six such second magnets 32, spaced at 60° intervals around the propulsion disc. However, it will be appreciated that any number of such magnets could be used; fewer or more than six, including just a single one.

In certain embodiments, the number of first magnets 22 will be the same as the number of second magnets 32. However, other embodiments are possible, including arrangements in which the number of second magnets 32 on the propulsion disc 30 is an integer multiple of the number of first magnets 22 on the drive disc 20, or arrangements in which the number of first magnets 22 on the drive disc is an integer multiple of the number of second magnets 32 on the propulsion disc 30.

The first magnets 22 and the second magnets 32 are located and spaced on the respective drive and propulsion discs 20, 30 such that the magnetic fields of the first permanent magnets 22 are able to interact with those of the respective second permanent magnets 32 during rotation of the drive disc 20 relative to the propulsion disc 30.

Whereas the magnets 22, 32 have been described as being located at the peripheries of their respective discs, it will be understood that other arrangements are possible. For example, one or both sets of magnets might be located more inwardly. In some embodiments, the respective sets of magnets can be arranged to be aligned in the axial direction of the motor (i.e. mounted concentrically at equal radial distances from the drive axis). In other embodiments, the respective sets of magnets might instead overlap (i.e. mounted concentrically, but at different radial distances from the drive axis). Whichever arrangement is employed, it is imperative that the respective magnets on the drive and propulsion discs are positioned so that their magnetic fields interact as they pass one another during rotation of the drive disc 20 relative to the propulsion disc 30, as will be described in greater detail below. Similarly, the propulsion disc 30 can have a smaller diameter than the drive disc 20 so that the propulsion disc 30 is on the inside of a larger drive disc 20. The drive disc 20 and the propulsion disc 30 can also be placed at the top, at the centre or the bottom or other intermediate levels of the magnetic motor 10 so long as the drive disc 20 and the propulsion disc 30 are coplanar and the magnets are so positioned on the drive disc 20 and the propulsion disc 30 so that they can mutually interact.

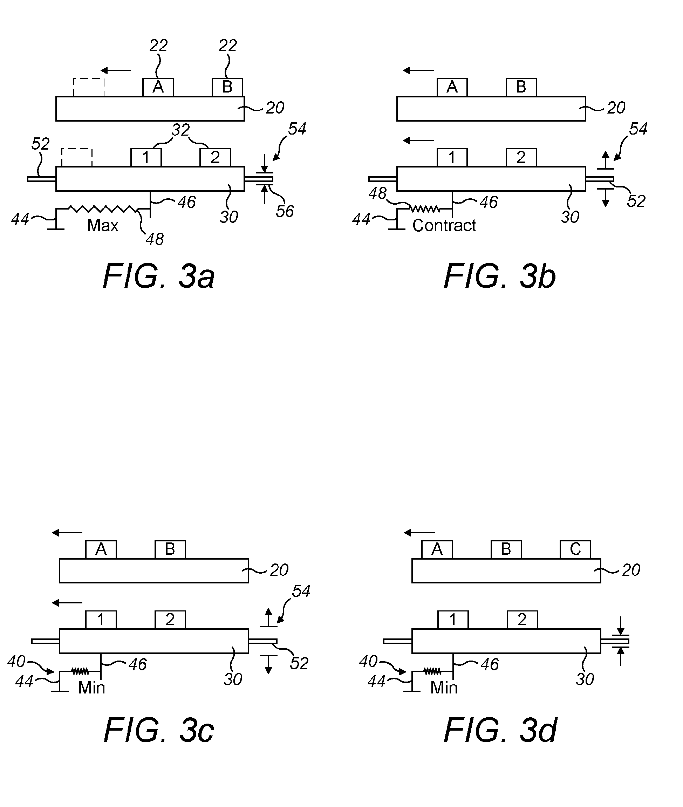

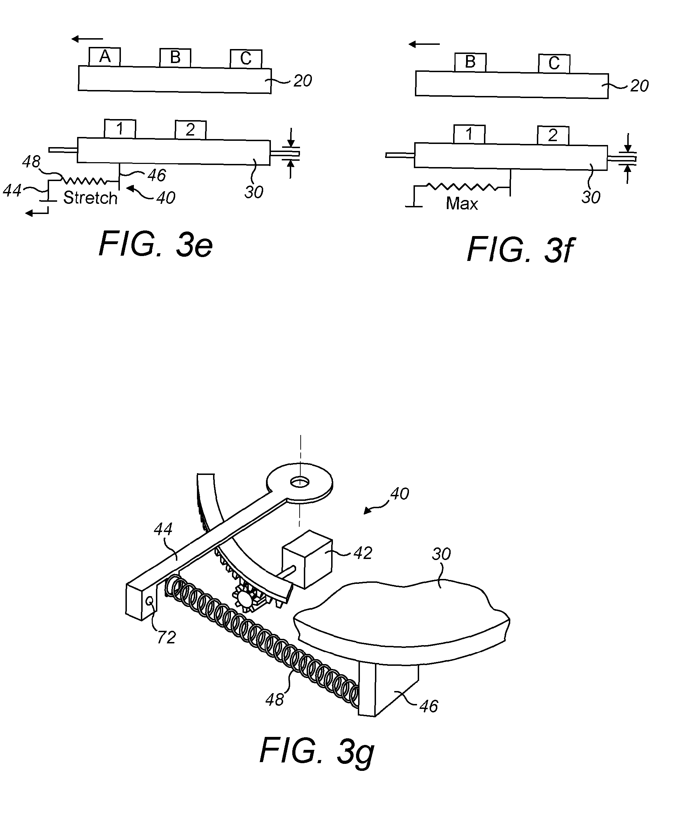

With reference in particular to Fig. 3g, a propulsion mechanism 40 comprises a capstan drive motor 42 operatively coupled to a drive arm 44 to rotate the drive arm about the drive axis. The drive arm 44 is further coupled to a fixed point 46 on the propulsion disc 30 via a tension spring 48. The purpose of this resilient coupling will be described below in the context of the operation of the magnetic motor 10.

It will be understood that alternative resilient means, such as a compression spring, could instead be employed to couple the propulsion disc 30 to the drive arm 44.

A braking mechanism 50 comprises a brake rotor 52 mounted to (or integral with) the propulsion disc 30, for example around the circumferential periphery thereof, and at least one brake callipers 54, with brake pads 56 disposed on opposite sides of the brake rotor 52, mounted on the support frame 12. The braking mechanism 50 is operative to actuate the callipers 54 between a braking position, in which the brake pads 56 are urged into contact with the brake rotor 52 to hold the propulsion disc 30 relative to the support frame 12, and a release position, in which the brake pads 56 are spaced from the brake rotor 52, which makes the propulsion disc 30 free to rotate. The callipers 54 may be actuated by any one of mechanical, hydraulic or pneumatic action. Other forms of braking systems may be employed if they can achieve the controlled braking, stopping and release of the propulsion disc 30 and be adjusted for regular timed braking and release.

With reference to Figs 3a to 3f, the basic principles of operation of the magnetic motor 10 will now be described.

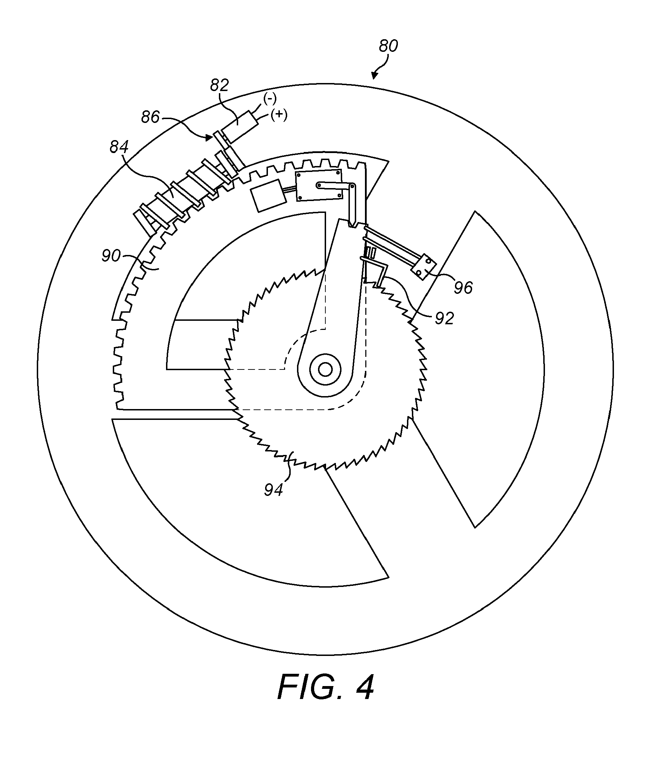

In a first step, the drive disc 20 is set in motion to rotate with the drive shaft 14 in the support frame 12. During this start-up phase, the braking mechanism 50 is actuated to hold the propulsion disc 30 relative to the support frame. This initial propulsion of the drive disc 20 may be done manually, for example by hand-crank attached to the drive shaft 14 or to the drive disc 20, or may be achieved by means of a starter mechanism. One example of a suitable starter mechanism 80 is shown in Fig. 4. The starter mechanism includes an electric starter motor 82 connected to a worm wheel 84 via gearing 86. The worm wheel 84 meshes with teeth 88 on an external surface of an arced sector 90 rotatably mounted about the drive shaft 14. A pawl 92 is pivotally mounted to the sector 90 in a position to latch into a toothed wheel 94 that is rigidly connected to the drive shaft 14. On receipt of a drive signal, the starter motor 82 operates to turn the worm wheel 84, in turn causing the sector 90 to turn, which in turn causes the toothed wheel 94 to turn, through the action of the pawl 92. The drive shaft 14, being rigidly connected to the toothed wheel 94, is thus rotated about its axis. Once the sector 90 has reached a limit stop, the signal to the started motor is cut and the sector is rotated back to an initial position under the action of restorative energy stored in a resilient means 96 that was tensioned as the sector was turned by the starter motor. This return motion does not affect the toothed wheel 94 because the pawl 92 does not latch to the teeth in this direction. Further actuations of the starter motor 82 will accelerate the drive disc 20 up to a predetermined threshold speed. The threshold speed will depend on the size of the magnetic motor 10 and the strength and arrangements of the magnets on the drive disc 20 and the propulsion disc 30, such as the distances and angles between them when they cross each other and interact, but is the speed necessary for the kinetic energy of the drive disc to overcome the magnetic interactions between the first and second magnets 22, 32 so that the drive disc is able to rotate past the stationary second disc 30.

During this start-up, the braking mechanism 50 is set in the braking position, so that the propulsion disc 30 is stopped, held and not free to turn.

Also during this start-up phase, the propulsion mechanism 40 is primed. To achieve this, the capstan drive motor 42 receives electrical signals to actuate the drive arm 44. Because the propulsion disc 30 is clamped in position by the braking mechanism 50, movement of the drive arm 44 relative to the fixed point 46 on the propulsion disc causes the tension spring 48 to stretch, storing potential energy.

Once the predetermined threshold speed has been achieved, the following steps are taken in a cyclical manner to ensure that the drive disc 20 (and hence the drive shaft 14) continues to rotate at a sufficient rate.

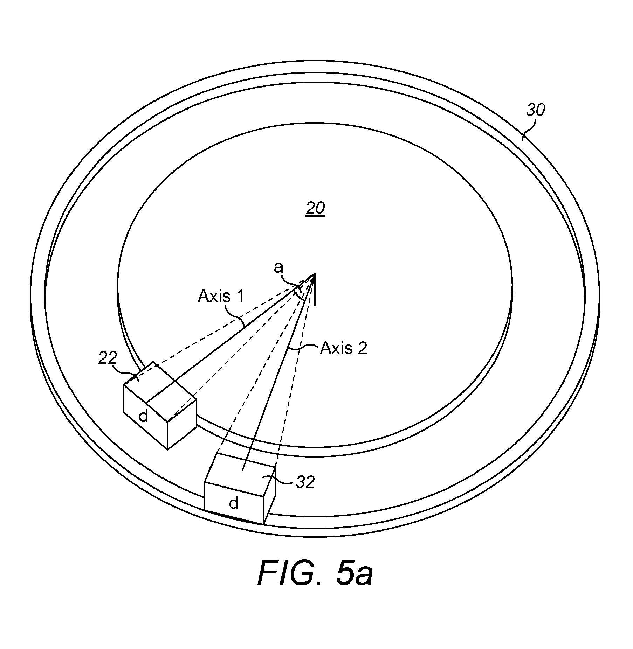

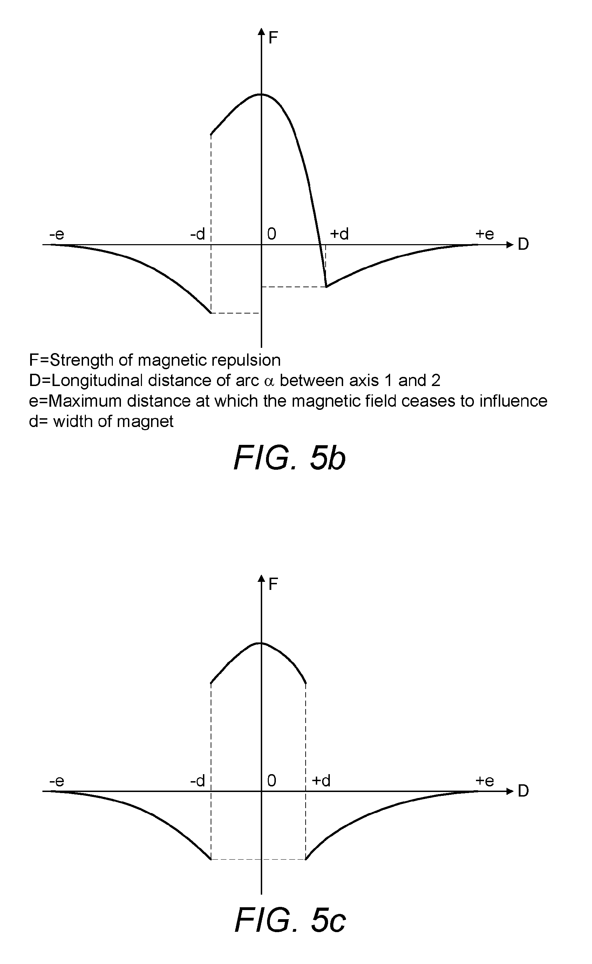

As a first step, illustrated in Fig 3a, the first magnets 22 'A' and 'B' on the drive disc 20 approach corresponding second magnets 32 '1' and '2' on the propulsion disc 30 until a point at which the magnetic forces of repulsion between the respective magnets are at a maximum (or close thereto) - see Figs 5a and 5b and the accompanying description.

During this phase of operation, the propulsion mechanism 40 is actuated: the drive motor 42 receives electrical signals to actuate the drive arm 44. Because the propulsion disc 30 is clamped in position by the braking mechanism 50, movement of the drive arm 44 relative to the fixed point 46 on the propulsion disc causes the tension spring 48 to stretch, storing potential energy.

The braking mechanism 50 is then released (Fig. 3b), and the potential energy stored in the tension spring 48 is converted into kinetic energy in the propulsion disc 30 as the spring contracts, drawing the fixed point 46 on the propulsion disc 30 towards the drive arm 44. The resultant acceleration of the propulsion disc 30 brings the propulsion disc rapidly up to the speed of the rotating drive disc 20 and maintains the propulsion disc 30 at the speed of the drive disc 20 with the second magnets 32 at the point of maximum repulsion with respect to the associated first magnets 22, or very close thereto, until the spring 48 has contracted to a point at which the fixed point 46 of the propulsion disc 30 has reached the drive arm 44 (which may coincide with a minimum length of the spring 48) (Fig. 3c). The propulsion disc 30 is therefore propelled at the same speed as the drive disc 20 for a length of time sufficient to boost the rotation of the drive disc 20 through the cooperative interaction of the magnetic fields of the respective first and second magnets 22, 32. Because the push from the propulsion disc 30 is made at the point of maximum repulsion between the respective first and second magnets 22, 32, and is maintained for a period of time by virtue of the propulsion disc 30 being rotated at the same speed as the drive disc 20, the period of maximum magnetic interaction is prolonged such that strength of the impulse or push delivered by the magnetic interaction is maximised and the drive disc 20 is impelled to rotate further.

At a determined point in the cycle, the braking mechanism 50 is actuated to stop rotation of the propulsion disc 30 (Fig. 3d). Whilst the brake is on and the propulsion disc 30 is held, momentum of the drive disc 20 causes the magnetic fields of the respective magnets to 'break free' of one another and the continued motion of the drive disc 20 relative to the now stationary propulsion disc 30 brings the magnetic fields of the next first magnets 22 around the periphery into proximity of the magnetic fields of the second magnets 32, such that first magnets 'B' and 'C' are now brought into registration with respective second magnets '1' and '2' see Fig. 3f.

During this phase of the cycle, the drive motor 42 is actuated to rotate or sweep the drive arm 44, thereby stretching the spring 48 once again (Fig 3e), for the cycle to continue.

Figures 3a and 3f correspond with one another, although the second magnets '1' and '2' in Fig 3f are in registration with first magnets 'B' and 'C' rather than the preceding magnets about the periphery: 'A' and 'B', as shown in Fig. 3a. In each of these conditions, the tension spring 48 is stretched to such extent necessary so that when the braking mechanism 50 releases the braking of the propulsion disc 30, the propulsion disc will accelerate to the same or substantially the same speed as the rotating drive disc 20. This may correspond to a maximum permitted stretch of the spring 48 depending on the strength and size of the particular spring.

It will be understood that the rotation of the drive disc 20 is continuous and substantially even, whereas the rotation of the propulsion disc 30 is intermittent, step-wise. By maximising the number of magnets around the periphery of the respective drive and propulsion discs 20, 30, the number of 'crossings' and hence the number of interactions between the respective first and second magnets 22, 32, is maximised, leading to a faster and jerkier, but more continuous rotation of the drive disc 20 depending on the weight of the drive disc 20 and the strength of the impulse delivered by the magnets on the drive disc 20 and the propulsion disc 30 on each crossing.

The timings of the various operations and actuations in the cycle are important for efficient and smooth operation of the magnetic motor 10. To this end, a control mechanism (not shown) is operatively coupled to the propulsion mechanism 40 and to the braking mechanism 50 to control operation of the magnetic motor 10. The control mechanism includes various sensors for feedback loop control, taking output from the sensors as input to control operation of the propulsion and braking mechanisms 40, 50.

The control mechanism for example preferably includes a proximity sensor 72 to detect when the fixed point 46 on the propulsion disc 30 reaches a predetermined proximity to the drive arm 44, an output of the proximity sensor being used as an input for the braking mechanism 50 and the propulsion mechanism 40. In particular, once the fixed point 46 is detected as having come within a certain distance of the drive arm 44, detected by the sensor 72, the control mechanism is triggered to actuate the brake mechanism 50 and/or to actuate the propulsion mechanism 40 so as to generate the above described intermittent rotation of the propulsion disc 30 and at the same time to avoid contact of the fixed point 46 with the drive arm 44 and the resultant damage that might otherwise occur.

The control mechanism also preferably further includes means to detect the relative rotational positions of the drive disc 20 and the propulsion disc 30, an output from said detection means being used as an input for the braking mechanism 50 and/or for the capstan drive motor 42 and the operation of the propulsion mechanism 40. Typically, the detection means comprises a plurality of markers 74 at regular angular intervals on the drive disc 20, and one or more sensors 76 mounted on the propulsion disc 30 and adapted to detect the passing of a marker 74.

The forces involved during the interaction of the respective magnetic fields are illustrated by reference to Figs. 5a to 5c. Figure 5a is a schematic illustration of a single first magnet 22 on the drive disc 20, and a single second magnet 32 on the propulsion disc 30. Each magnet is shown as having a width d. The graph of Figure 5b shows the strength of magnetic repulsion, F, on the y-axis, plotted against the longitudinal distance, D, of arc α between the axes 1 and 2 of the respective magnets, on the x-axis. e is the maximum distance, where the magnetic field ceases to influence.

Figure 5b thus depicts the combined magnetic forces exerted by the magnets 22, 32 if, absent any other factors, they were to approach, cross and pass one another with the second magnets 32 mounted on the propulsion disc 30 braked and stationary. The profile of the graph would be the same irrespective of the strengths of the magnets. In effect, when the first magnets 22 are far away from the second magnets 32, there is substantially no magnetic interaction between them. That situation is marked on Figure 5b as the point P0 or '-e'. As the two magnets are brought closer together, the magnetic fields are first mutually repulsive (in increasing strength) such that as the second magnet 32 approaches the first magnet 22, the first magnet 22 begins to exert a repulsive force on the second magnet 32. This magnetic repulsion force is at first negative energy which impedes the rotation of the drive disc 20. Those positions are shown marked on Figure 5b as being any position between P0 or '-e' to P1 or '-d'.

As the second magnet 32 continues to approach and cross the first magnet 22, the magnetic force becomes positive energy which assists the rotation of the drive disc 20 in the direction of rotation in the form of a repulsion force which reaches its maximum (known as the 'firing point'), illustrated in Fig. 5b at point P2. All points on the graph of Fig 5b between P1 and P2 are positive magnetic energy which assists the rotation of the drive disc 20. This positive energy reaches a peak at point marked P2. After the crossing of the firing point by the second magnets 32 at point marked P2, the repulsive force switches to an attraction force which remains positive energy in terms of assisting rotation of the drive disc 20, which attraction force rapidly diminishes to reach zero and become negative energy which impedes the rotation of the drive disc 20 just before it reaches the point marked P3 on Fig 5b, when the negative energy reaches another peak. The magnetic energy which is an attraction force then increases after the point marked P3 with the further separation of the respective magnets at the point marked P4 or '+d', when again it becomes zero and there is no further magnetic interaction of the respective magnetic fields. (It is reiterated that this describes the forces with the momentum of rotation of the drive disc 20 with the second magnets 32 mounted on the propulsion disc 30 braked and stationary absent other influencing factors, such as the intermittent movement of the propulsion disc 30 by the propulsion mechanism 40).

If the drive disc 20 is stationary or not rotating at the threshold speed, the magnetic interaction between the magnets of the drive and propulsion disc 20, 30 is that they would not cross each other. Instead they would 'lock' at a certain point and if either the drive disc 20 or the propulsion disc 30 were then to be moved, the disc which is moved would drag or pull the other with it. The magnetic motor 10 would thus not operate. Rotation of the drive disc 20 below the threshold speed would bring the magnetic motor to a stop because this would then prevent any crossings of the first magnets 22 on the drive disc 20 with the second magnets 32 on the propulsion disc 30 and there would be no further impulses on the drive disc 20.

It will be noted that the rotation of the drive disc 20 at the threshold speed is thus necessary in order to start the magnetic motor 10 and for its continued operation, which allows the first and then subsequent crossings of the magnets on the drive disc 20 and the propulsion disc 30 and to avoid the locking of the magnets on the drive and propulsion disc 20, 30.

It will also be noted that rotation of the drive disc 20 at or above the threshold speed with the propulsion disc 30 being stationary will enable the first magnets 22 on the drive disc 20 and those 32 of the propulsion disc 30 to cross a number of times. On each crossing, the magnets of the propulsion disc 30 will give the magnets on the drive disc 20 an impulse - although the impulse is less than that required to keep the drive disc 20 rotating because of the attracting magnetic force exerted on each other immediately after the crossing of the firing point. The drive disc 20 would thus continue to rotate for a number of revolutions and would then come to a halt when the magnetic fields reach equilibrium.

Achieving that the first magnets 22 on the drive disc 20 deliver an impulse onto the second magnets 32 mounted on the propulsion disc 30 is obtained by mounting the second magnets 32 on the propulsion disc 30 such that their magnetic axes are perpendicular to those of the first magnets 22 on the drive disc 20.

This can be contrasted with the example shown in Figure 5c of two similar magnets each mounted so that their magnetic axes are parallel and of the same polarity. In that example, as the magnets cross, the forces reverse symmetrically, such that the net effect is zero.

The first and second magnets have each been described as respective single entities for simplicity of explanation. However, in preferred embodiments, each respective first magnet 22 in fact comprises a group of individual sub-magnets, each sub-magnet having a particular size, shape, field strength, and polarity and being positioned and oriented relative to the other sub-magnets of the group so that the group together defines an effective magnet 22 having a predetermined field strength and profile equivalent to that described in the context of single magnets.

Also or instead, each respective second magnet 32 may in fact comprise a group of individual sub-magnets, each sub-magnet having a particular size, shape, field strength and polarity and being positioned and oriented relative to the other sub-magnets of the group so that the group together defines an effective magnet 32 having a predetermined field strength and profile equivalent to that described in the context of single magnets.

The first magnets 22 may be mounted on the drive disc 20 such that their magnetic axes are arranged radially, or tangentially, or any angle there between. Moreover, the polarity of the first magnets may be such that the north pole is closer to the drive axis than the south pole, or more forward in the direction of rotation than the south pole, or vice-versa. Reversing the polarities of second magnets 32 on the propulsion disc 30 and the polarities of the first magnets 22 on the drive disc 20 will change the direction in which the drive disc 20 rotates. In such case, for the magnetic motor 10 to function, it is necessary that the propulsion disc 30 be rotated intermittently by the propulsion mechanism 40 in the same direction as the rotation of the drive disc 20. The magnetic motor 10 and the propulsion arm and propulsion mechanism would therefore have to be designed to rotate in the opposite direction

The second magnets 32 may be mounted on the propulsion disc 30 such that their magnetic axes are perpendicular or substantially perpendicular to those of the first magnets 22 mounted on the drive disc 20.

Optimal relative orientations for particular numbers, strengths, spacings and relative strengths of the first and second magnets 22, 32 can be various.

The drive motor 42 has been described above as being a capstan motor. It will be understood that other forms of drive motor could instead be used. One aspect of a capstan motor that is of particular benefit to this application is that it may be programmed to apply a predetermined force for a set period of time and at a given speed. Moreover, it will be understood that more than a single drive motor 42 may be employed to propel the propulsion mechanism, for example where the size of the motor is increased. Also, more than a single propulsion mechanism may be employed.

For efficient operation, it is important to maximise the rotational inertia of the drive disc 20 and drive shaft 14 combination, so as to achieve a fly-wheel effect. The drive disc 20 is therefore constructed and arranged to include as much mass as possible at a maximum radial extent from the drive axis. One way to achieve this is to use heavy first permanent magnets 22 placed at the periphery of the drive disc 20. In contrast, it is important to minimise the rotational inertia of the propulsion disc 30 so as to minimise the energy required to accelerate the propulsion disc 30 up to the speed of the drive disc 20 at each step-wise operation. The mass of the propulsion disc 30 is thus kept to a minimum possible, particularly at distances radially remote from the drive axis.

With heavier, more powerful motors, it may be necessary to utilise more than a single braking mechanism 50, and/or for each braking mechanism to comprise more than a single brake rotor 52 and associated braking hardware (callipers 54 and pads 56).

Energy is input to the system comprising the magnetic motor 10 by inputs (for example manual or electrical) to the starter mechanism 80, the drive motor 42, the braking mechanism 50 and the control mechanism. The energy input to the system is converted to kinetic energy in the drive disc 20 and drive shaft 14. Energy may be output from the system through the drive shaft 14. As an example, an alternator (not shown) may be connected to the drive shaft 14 to convert the kinetic energy of the shaft into electrical energy.

### Exemplary Specifications of a Magnetic Motor According to the Invention

1. Diameter of the propulsion disc 30: 76 cm;
2. Diameter of the drive disc 20: 60 cm;
3. Weight of propulsion disc 30 with second magnets 32 and other described equipment: 6 kg;
4. Weight of drive disc 20 with first magnets 22 and other described equipment: 14 kg;
5. Number of magnetic blocks 32 on propulsion disc 30: 2;
6. Number of individual magnets comprising the magnetic blocks 32 on propulsion disc 30: 3
7. Magnetic strength of each individual magnet in the magnetic blocks 32 on propulsion disc 30: 2 Tesla.
8. Number of magnetic blocks 22 on drive disc 20: 2.
9. Number of individual magnets comprising the magnetic blocks 22 on drive disc 20: 11.
10. Magnetic strength of each individual magnet in the magnetic blocks 22 on drive disc 20: 2 Tesla.
11. Weight of each magnetic block 32 on propulsion disc 30: 210 g.
12. Weight of each magnetic block 22 on drive disc 20: 770 g.
13. The combined strength of the magnetic force exerted in a clockwise direction on interaction of both the first magnets 22 and the second magnets 32 at the moment that the braking mechanism 50 is released: 0.16 N.
14. Distance between second magnets 32 on the propulsion disc 30 and first magnets 22 on the drive disc 30 on their crossing: 5 cm.
15. Arrangement of polarity of first magnets 22 on drive disc 20: North forward in direction of clockwise rotation; South back in direction of clockwise rotation;
   i.e. + Central axis 14
   ← Direction of rotation
   N--S
16. Arrangement of polarity of second magnets 32 on propulsion disc 30: North closest to or facing the axis 14 or centre of motor 10, South furthest or facing away from axis 14 or centre of the motor;
   i.e. + Central axis 14
   ← Direction of rotation
   N
   S.
17. Angle of magnets 32 on the propulsion disc 30: poles aligned radially with respect to the drive shaft 14 (i.e. at 90 degrees to a line tangential to the circumference of the propulsion disc);
18. Angle of the first magnets 22 on the drive disc 20 with respect to the tangent line of the drive disc 20: poles skewed 12 degrees from a line tangential to the circumference of the drive disc 20 at the respective magnets 22, with N skewed towards drive shaft 14 and S skewed away from the drive shaft 14;
19. Spring force of the spring 48 of the propulsion mechanism 40: 8 kg/cm;
20. Torque of the propulsion arm drive motor 42: 0.18 Nm;
21. Length of the propulsion drive arm 44: 22 cm;
22. Distance of travel of the propulsion drive arm 44 in each step movement: 4-5 cm;
23. Frequency of stretching of the propulsion drive arm 44: 2 per second;
24. Frequency of braking of propulsion disc 30: 1 every 0.5 second;
25. Time that the propulsion disc 30 is braked/stopped: 0.3 seconds per cycle; and
26. Threshold speed of the drive disc 20: 1 cycle or revolution of the drive disc 20 per 1.5 seconds.

## Claims

1. A magnetic motor comprising:
a first disc, mounted on a drive axis and having mounted thereon, at regular angular intervals, a number of first permanent magnets having a magnetic field of a first strength and polarity;
a second disc, mounted independently of the first disc for free rotation about the drive axis but coplanar with the first disc and having mounted thereon, at regular angular intervals, a number of second permanent magnets, each second magnet having magnetic field of a second strength and polarity, wherein the first and second magnets are located and spaced on the respective first and second discs such that the magnetic field of the or each first permanent magnet is able to interact with that of the or each second permanent magnet during rotation of the first disc relative to the second disc;
a propulsion mechanism resiliently coupled to the second disc and operatively coupled to a drive motor;
a braking mechanism operatively associated with the second disc; and
a control mechanism operatively coupled to the propulsion mechanism and to the braking mechanism and adapted to intermittently and cyclically, under system feedback and with the first disc rotating above a threshold speed:
i) actuate the propulsion mechanism to urge the second disc to rotate to a speed substantially matching that of the first disc, thereby impelling the first disc to rotate through cooperative interaction of the magnetic fields of the respective first and second magnets;
ii) actuate the braking mechanism to brake the second disc relative to the first disc, to stop and hold the second disc relative to the continuously rotating first disc, thereby allowing the magnetic fields of the respective first and second magnets to cross and move away from each other; and
iii) actuate the braking mechanism to release the brake on the second disc on receiving notice of the respective first and second magnets being at a point where the magnetic interaction between the first and second magnets is at or close to a maximum;
wherein electrical energy input via the drive motor is converted to kinetic energy in the first disc.

2. The magnetic motor of claim 1, wherein there are multiple equally spaced magnets on the second disc.

3. The magnetic motor of claim 1 or claim 2, wherein there are multiple equally spaced magnets on the first disc.

4. The magnetic motor of any of claims 1 to 3, wherein there are the same number of magnets on the first disc as on the second disc.

5. The magnetic motor of any of claims 1 to 3, wherein the number of magnets on the second disc is an integer multiple of the number of magnets on the first disc.

6. The magnetic motor of any of claims 1 to 3, wherein the number of magnets on the first disc is an integer multiple of the number of magnets on the second disc.

7. The magnetic motor of any preceding claim, wherein the magnets are located at the periphery of the respective discs.

8. The magnetic motor of any preceding claim, wherein the or each first magnet comprises a group of individual sub-magnets, each sub-magnet having a particular field strength and polarity and being positioned and oriented relative to the other sub-magnets of the group so that the group together defines an effective magnet having a predetermined field strength and profile.

9. The magnetic motor of any preceding claim, wherein the or each second magnet comprises a group of individual sub-magnets, each sub-magnet having a particular field strength and polarity and being positioned and oriented relative to the other sub-magnets of the group so that the group together defines an effective magnet having a predetermined field strength and profile.

10. The magnetic motor of any preceding claim, wherein the propulsion mechanism comprises a drive arm coupled to the drive motor and adapted to be rotated thereby about the drive axis, the drive arm being coupled to a fixed point on the second disc via a tension spring.

11. The magnetic motor of claim 10, wherein the control mechanism further comprises a proximity sensor to detect when the fixed point on the second disc reaches a predetermined proximity to the drive arm, an output of the proximity sensor being used as an input for the braking mechanism.

12. The magnetic motor of any preceding claim, wherein the control mechanism further comprises means to detect the relative rotational positions of the first and second discs, an output from said detection means being used as an input for the braking mechanism and/or for the drive motor and the propulsion mechanism.

13. The magnetic motor of claim 12, wherein the detection means comprises a plurality of markers at regular angular intervals on the first disc, and one or more sensors mounted on the second disc and adapted to detect the passing of a marker.

14. The magnetic motor of any preceding claim, wherein the braking system comprises a brake rotor mounted to or integral with the second disc, and one or more brake callipers mounted on a support frame of the magnetic motor and operative, under hydraulic, pneumatic, or mechanical actuation, to urge brake pads into and out of contact with the brake rotor to respectively stop, hold and release the second disc relative to the support frame.

15. A method of driving an output shaft, comprising the steps of:
providing a first disc, mounted on the output shaft about a drive axis and having mounted thereon, at regular angular intervals, a number of first permanent magnets having a magnetic field of a first strength and polarity;
providing a second disc, mounted independently of the first disc for free rotation about the drive axis coplanar with the first disc and having mounted thereon, at regular angular intervals, a number of second permanent magnets, each second magnet having magnetic field of a second, strength and polarity, wherein the first and second magnets are located and spaced on the respective first and second discs such that the magnetic field of the or each first permanent magnet is able to interact with that of the or each second permanent magnet during rotation of the first disc relative to the second disc;
providing a propulsion mechanism resiliently coupled to the second disc and operatively coupled to a drive motor;
providing a braking mechanism operatively associated with the second disc;
providing a control mechanism operatively coupled to the propulsion mechanism and to the braking mechanism; and
intermittently and cyclically, under system feedback and with the first disc rotating above a threshold speed:
i) actuating the propulsion mechanism to rotate the second disc to a speed substantially matching that of the first disc, thereby impelling the first disc and the output shaft to rotate through cooperative interaction of the magnetic fields of the respective first and second magnets;
ii) actuating the braking mechanism to stop and hold the second disc relative to the continuously rotating first disc, thereby allowing the magnetic fields of the respective first and second magnets to cross and move away from each other; and
iii) actuating the braking mechanism to release the brake on receiving notice of the respective first and second magnets being at a point where the magnetic interaction between the first and second magnets is at or close to a maximum;
wherein electrical energy input via the drive motor is converted to kinetic energy in the first disc and the output shaft.
